(19) **Europäisches Patentamt**

**European Patent Office**

**Office européen des brevets**

(11) **EP 1 056 580 B1**

(12) **EUROPEAN PATENT SPECIFICATION**

(45) Date of publication and mention
of the grant of the patent:
**18.06.2003 Bulletin 2003/25**

(51) Int Cl.⁷: **B29C 44/30**, B29C 44/32,
B32B 5/20

(21) Application number: **99905750.8**

(22) Date of filing: **05.02.1999**

(86) International application number:
**PCT/US99/02444**

(87) International publication number:
**WO 99/039891 (12.08.1999 Gazette 1999/32)**

(54) **LAMINATED PHENOLIC RESIN FOAMED BOARD AND ITS MANUFACTURING METHOD**

LAMINIERTE PHENOLHARZSCHAUMSTOFFPLATTE UND VERFAHREN ZU DEREN
HERSTELLUNG

PLAQUE STRATIFIEE DE MOUSSE DE RESINE PHENOLIQUE ET SON PROCEDE DE
FABRICATION

(84) Designated Contracting States:
**AT BE CH DE FI FR GB IT LI NL SE**

(30) Priority: **05.02.1998 JP 2413098**

(43) Date of publication of application:
**06.12.2000 Bulletin 2000/49**

(73) Proprietor: **OWENS CORNING**
**Toledo, Ohio 43659 (US)**

(72) Inventors:
• **WATANABE, Takayasu**
**Suzuka-shi, Mie 5130846 (JP)**

• **KIPP, William, George**
**Courtright, Ontario N0N 1H0 (CA)**

(74) Representative: **West, Alan Harry et al**
**R.G.C. Jenkins & Co.**
**26 Caxton Street**
**London SW1H 0RJ (GB)**

(56) References cited:
**FR-A- 2 456 180            US-A- 4 423 163**

• **PATENT ABSTRACTS OF JAPAN vol. 007, no.
092 (M-208), 16 April 1983 & JP 58 016838 A
(SEKISUI HOUSE KK), 31 January 1983 cited in
the application**

Printed by Jouve, 75001 PARIS (FR)

**Description**

The present invention pertains to a foamed phenol resin laminate, which has considerably improved surface flatness, bending elasticity modulus in the longitudinal direction, bending strength, and flexibility and has excellent construction performance and adiabatic performance, and its continuous molding method.

A method is known in which a surfactant, foaming agent, and catalyst are added and mixed to a phenol resin, said mixed composition is continuously discharged on a running face material, it is coated with an upper surface material, and a foamed phenol resin body laminate is manufactured by passing it through a slat-type double conveyor or an endless belt conveyor. In Japanese Kokai Patent Application No. Sho 59[1984]-24639, a method for manufacturing a foamed phenol resin body by sandwiching between rolls is shown, and in Japanese Kokai Patent Application No. Sho 58[1983]-16838, a method for manufacturing a foamed phenol resin body by a conveyor in the form in which a slat-type conveyor is integrated with an endless belt conveyor, is shown.

Since the slat-type double conveyor has a structure with a strong mechanical gripping pressure, compared with the endless belt conveyor, the pressure adjustment of the foamed body in the foaming process is easy. From this fact, it is thought to have an advantage in which the favorable properties of the foamed body, such as independent foam rate, are easily obtained. In Japanese Kokai Patent Application No. Sho 57[1982]-91244, upon which the preamble of the independent claims 1 and 3 is based, a method for manufacturing a phenol foam by the slat-type double conveyor is presented.

It is known that the foamed phenol resin body with a high independent foam rate is an excellent insulator with a very low heat conductivity. In Japanese Kokai Patent Application No. Hei 1[1989]-138244, a method for manufacturing a closed-cell foamed phenol resin body, including a process which forms a mixture of a substance selected from the group of low-viscosity resol, urea, and dicyandiamide, and a surfactant and mixes said mixture with a foaming agent and a catalyst, is presented. In its Example 7, the adiabatic performance of the urea-modified foamed phenol resin body exhibits excellent antiaging property. In other words, it is shown that its excellent adiabatic performance is retained over a long term.

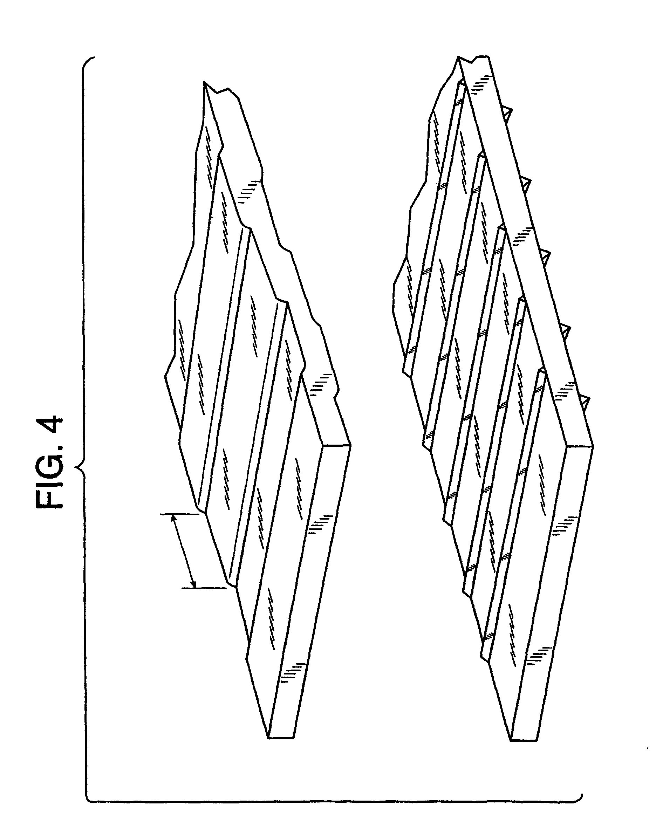

However, when a flexible facing material (nonwoven fabric composed of glass fibers, etc.), is used as a face material, in the method using the slat-type conveyor, traces of the slats remain on the product, which is not appropriate and is indicated as an inadmissable problem in Japan (Recent Trends in Chemistry and Technology of Phenol Foams, Vol. 38, No. 2, pp. 50-59, 1987). The slat trace problem is a flapping or level difference phenomenon almost periodically seen in the running direction, and as shown in Figure 4 (in both examples shown in the upper and lower diagrams, the slat width is 6 in; the level difference and flapping are caused corresponding to the slat width), its pattern varies. It is thought that the cause of the problem is that each slat of the slat-type conveyor cannot eliminate the level difference by the finishing size, or because slat traces are formed in the gaps between the slats when the foaming pressure varies excessively in the foaming process.

The problem of the surface flatness of the foamed body is not limited to the problem of the product quality, and if the problem is severe, a space layer (air layer) is generated between the insulator (foamed body) and the sheet-shaped material of the other party (for example, construction material board, panels, etc.) in contact with the surface. It becomes an air-circulating layer and hinders the adiabatic effect, and there is also the possibility that the material with excellent adiabatic property like this foamed body cannot provide sufficient performance.

Furthermore, when the flexible face material is used, the foamed phenol resin body laminate is apt to be bent, and there is difficulty in handling it in construction when used as a construction material. When the foamed body laminate is used as a sheet-shaped insulator, a size of 90 cm in width and 180 cm in length, which are standard dimensions for construction materials, is adopted, so that the laminate is mostly handled in a long shape in the longitudinal direction. For this reason, in particular, the bending in the longitudinal direction causes a problem.

FR-A-2456180 describes a thermal insulating board comprising a phenolic foam sheet with a protective plastics film shrunk around it. The shrunk film encloses also a number of reinforcing ribs disposed longitudinally to endow the insulating board structure with self-supporting properties.

The present invention seeks to provide a foamed phenol resin laminate which solves or eliminates the problems and disadvantages outlined above, having a greatly improved surface flatness, indistinct slat traces, and improved longitudinal bending elasticity modulus, bending strength and bending.

In accordance with a first aspect of the invention, there is now provided a foamed phenol resin laminate constituted by a core of a foamed phenol resin and flexible facing material attached without adhesive to both faces thereof, characterize in that the laminate has a ratio of bending elasticity modulus in a first direction within the plan of the laminate, $E_{MD}$, to bending elasticity modulus in a second direction within the plan of the laminate, perpendicular to said first direction, $E_{TD}$, of 1.6 to 2.8.

In accordance with a second aspect of the invention, there is provided also a method for the manufacture of such a foamed phenol resin laminate, which comprises mixingtogether a phenol resin, a surfactant, a foaming agent and a catalyst thereby to form a foaming mixture, discharging the foaming mixture onto a flexible facing material, coating the upper surface of the foaming mixture with a flexible facing material, and passing the resulting laminate through a double slat conveyor system, characterized by stretching the foamed laminate in the running direction before curing of the foam is complete.

The greatest difference between the present invention and the prior art is that the ratio $E_{MD}/E_{TD}$ of the bending elasticity modulus in the longitudinal direction $E_{MD}$ and the bending elasticity modulus in the width direction $E_{TD}$ was about 1.5 at most in the foamed phenol resin body laminate of the prior art, while the ratio $E_{MD}/E_{TD}$ is 1.6-2.8 in the foamed phenol resin body laminate of the present invention.

The greatest difference in the manufacturing method between the present invention and the prior art is that foaming and molding are carried out only by a first double conveyor in the prior art, while after a primary foaming and molding by the first conveyor, a secondary molding is carried out by stretching in the running direction in a state prior to the completion of curing (by second double conveyor, etc.), in the present invention.

The role of the constitutional requirement of the present invention, which is different from the above-mentioned prior art, is a considerable improvement of the surface flatness, an improvement of the bending elasticity modulus in the longitudinal direction and the strength of the foamed phenol resin body laminate, an improvement of the bending, and a large improvement of the handling property during construction, etc.

The foamed phenol resin body laminate of this invention must have $E_{MD}/E_{TD}$ in the range of 1.6-2.8. The effects exerted by the ratio of bending elasticity modulus in the length direction and width direction on the difficulty of bending the foamed body laminate and the ease of handling the foamed body laminate in this invention are explained as follows according to the present inventors. For example, when a foamed body laminate of 90 cm in width and 180 cm in length is handled, it is held at the two ends in the width direction for handling. In this case, however, the foamed body laminate tends to bend somewhat in the width direction. When the laminate is held at the two ends in the width direction, the foamed body laminate bends a little in the width direction and becomes a bow-shaped laminate. Also, the foamed body laminate can be held easily by both hands and is very hard to bend in the length direction.

In other words, if the ratio $E_{MD}/E_{TD}$ of the bending elasticity modulus in the length direction $E_{MD}$ to that in the width direction $E_{TD}$ is high, the foamed body laminate can be handled easily and is hard to bend in the length direction. For the conventional foamed phenol resin body laminate formed by bonding flexible surface materials, the ratio $E_{MD}/E_{TD}$ of the bending elasticity modulus in the length direction $E_{MD}$ to that in the width direction $E_{TD}$ is no more than 1.5, and the laminate is prone to bending in the length direction. This is a disadvantage. On the other hand, according to the research results obtained by the present inventors, when the value of $E_{MD}/E_{TD}$ is 1.6 or larger, the laminate becomes much harder to bend in the length direction during handling. However, the value of $E_{MD}/E_{TD}$ cannot exceed 2.8 because bending in the width direction will become a problem when the value of $E_{MD}/E_{TD}$ exceeds 2.8. It is preferred that the value of $E_{MD}/E_{TD}$ be in the range of 1.8-2.4. The bending elasticity modulus $E_{MD}$ in the length direction should be 220 kg/cm$^2$ or larger, or preferably, 240 kg/cm$^2$ or larger not only in the case when the laminate is held at the two ends in the width direction but also from the point of view of general handling. The bending elasticity modulus $E_{TD}$ in the width direction should be 80 kg/cm$^2$ or larger, or preferably, 100 kg/cm$^2$ or larger from the same point of view of general handling. Also, the flexural strength in the length direction should be 4.9 kg/cm$^2$ or higher, or preferably, 5.2 kg/cm$^2$ or higher in order to prevent bending breakage in the general handling operation.

The phenol resin used in this invention is a resol phenol resin prepared by reacting the raw materials, that is, phenol and formaldehyde, with each other in the presence of a basic catalyst. In order to achieve a relatively low reaction speed in the foaming and curing process and to reduce the deterioration over time in the adiabatic function of the product, it is preferred to use a modified phenol resin containing urea and/or dicyandiamide and melamine in this invention. With the aforementioned phenol resin used as the core material, the foamed body laminate of this invention is formed by bonding a flexible surface material to both sides of the core material without using an adhesive layer.

Examples of the flexible surface materials that can be used in this invention include nonwoven fabric made of polyester, nylon, polypropylene, etc., woven fabric, glass fiber nonwoven fabric, calcium hydroxide paper, aluminum oxide paper, magnesium silicate paper, and other types of inorganic fiber paper, as well as kraft paper and other types of paper. In general, the flexible surface material is provided in the form of a roll.

Among the aforementioned flexible surface materials, nonwoven fabric, woven fabric, and inorganic fiber paper with a fiber size of [sic] are preferred from the point of view of the adhesive strength between the surface material and foamed body. In particular, the synthetic fiber nonwoven fabric and paper are most preferred because they are inexpensive and can make the foamed body laminate easy to handle. Also, the nonwoven fabric with a fiber size of 18 μm or smaller is preferred in order to prevent exudation of the foaming phenol resin. Moreover, in order to make the surface material easy to handle in the manufacturing process and in consideration of the flexural rigidity of the product, it is preferred that the basis weight be in the range of 20-400 g/cm$^2$.

It is preferred that the thickness of the surface material be in the range of about 0.1-1 mm.

Although there is no special limitation on the thickness of the core material made of the aforementioned phenol resin, the core material is preferred to have a thickness in the range of 3-150 mm because it will be mainly used as an adiabatic material. Also, the density is preferred to be in the range of 20-100 kg/m³.

The invention will now be described in greater detail by way of example only with reference to the accompanying drawings, in which:

Fig. 1 is a plot comparing the surface flatness of laminates of the invention and prior art;
Fig. 2 is a schematic illustration of apparatus used to make the laminate of the invention;
Fig. 3 is a plot of bending ratio against stretch rate for the laminate of the invention; and
Fig. 4 is a perspective view of the surface appearance of a foamed laminate according to the prior art.

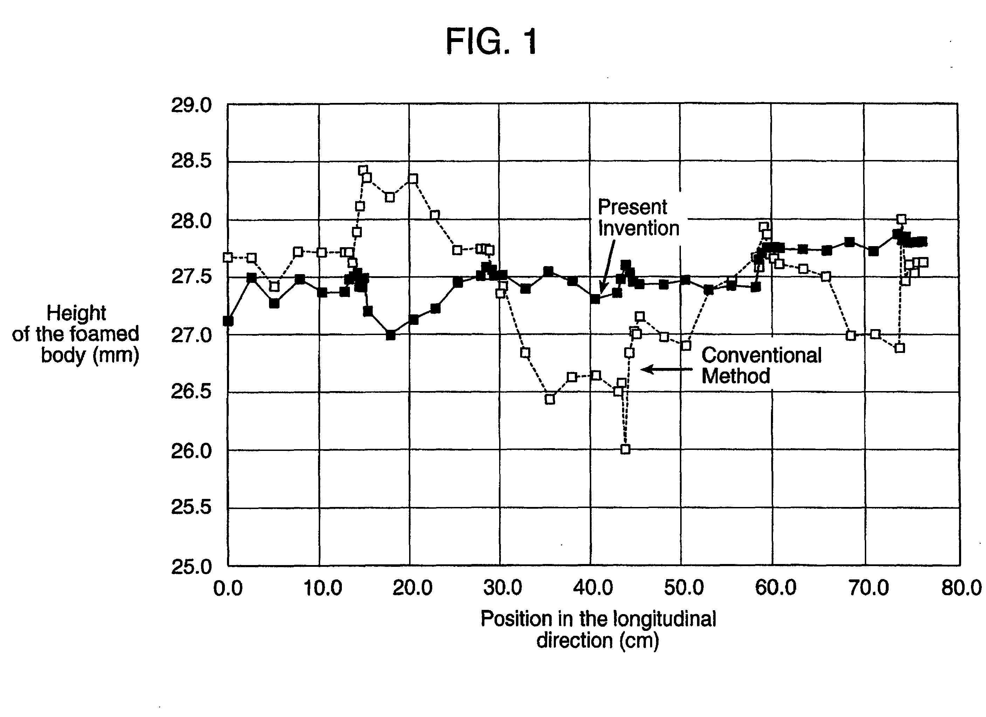

Figure 1 shows an example of the difference in the surface shape of the foamed bodies formed according to the method of this invention and the conventional method. The abscissa indicates the position of the foamed body in the length direction, and the ordinate indicates the measured height (thickness) of the foamed body at said position. In the measurement of the thickness of the foamed body, the foamed body, cut into about [preces] 1.1 m in width and about 1.2 m in length, was placed on a table with a flat surface, and the height of the central portion in the width direction was measured in the length direction. As the method for measuring the height, first, portions of 5 in were measured with intervals of 1 in (2.54 cm), and 1 in of the part with a severe flapping shape corresponding to the joints of the slats was measured at intervals of 1/6 in (Measured over 30 in (76.2 cm) as the entire length. The thickness was measured under a press force of 5 g using a dial gauge having a tip with a columnar flat bottom shape with a diameter of 1.5 mm.) As can be seen from Figure 1, compared with the foamed body manufactured by the conventional method, the modified foamed sheet-shaped phenol resin body laminate manufactured by the method of this invention shows significant improvement in the surface flatness. The thickness variation of the conventional foamed body is 26.0-28.5 mm, while the thickness variation in this invention is improved to 27.1-27.8 mm. In consideration of the appearance of the foamed body laminate and in order to reduce the gap formed between the foamed body laminate and the wall or panel surface when the foamed body laminate is used as an adiabatic material, the surface flatness measured by a method to be explained later is preferred to be 0.4 mm or smaller.

In the following, the manufacturing method of the foamed body laminate of this invention will be explained.

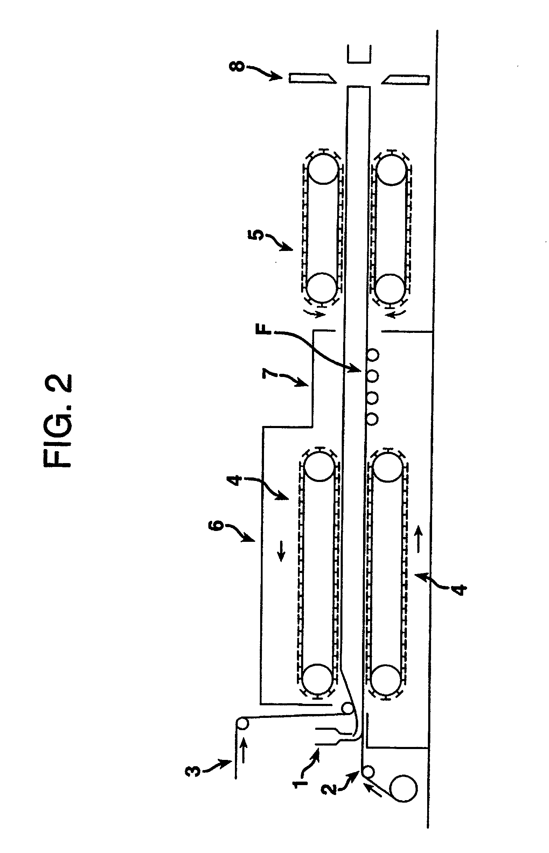

Figure 2 explains the method for manufacturing a modified foamed phenol resin body of the present invention and a manufacturing apparatus used in the method. 1 is an apparatus which mixes phenol resin, foaming agent, and acidic catalyst by a mixer and supplies said foaming phenol resin to a face material. 2 and 3 are continuously running lower surface material and upper surface material. 4 is a slat-type double conveyor consisting of metal plate, etc., rotated at a fixed speed in the direction of the arrowhead. The slat-type double conveyor 4 has the role of foaming and curing while shaping at a prescribed thickness by heating a continuously guided foaming phenol resin (the heater is not shown in the figure). 5 is an apparatus which grips a continuous stripe-form foamed body F passed through the above-mentioned slat-type double conveyor 4 and stretches it at a prescribed magnification (hereinafter, called a second double conveyor 5). In order to appropriately stretch the continuous stripe-form foamed body F, a box body 7 for maintaining the temperature of the stretched part and if necessary, a heater are installed at the outlet part of the above-mentioned slat-type double conveyor 4 to maintain said foamed body F at an appropriate temperature (the heater is not shown in the figure).

At the outlet of the slat-type double conveyor 4, curing of the continuous stripe-form foamed body F is almost finished; however, it has flexibility to the degree that a slight deformation is possible. It is undesirable to cure the continuous stripe-form foamed body F to a state in capable of deformation at the outlet of the slat-type double conveyor 4, because the stretching effect becomes poor. The curing state can be adjusted to a desirable range at the outlet of conveyor 4 by appropriately setting the operation conditions, namely, the amount of the catalyst and the temperature of the conveyor.

The modified phenol resin containing at least one of urea, dicyandiamide, and melamine is particularly preferred since its curing state at the outlet of conveyor (4) can be maintainly easily in an appropriate state because of its moderate curing reactivity.

In order to reduce the change overtime in the heat conductivity of the foamed body laminate, it is necessary to further cure the laminate after maintaining it at a temperature in the range of 60-140°C for several hours (postcuring).

The continuous foamed body F is stretched by setting the transport of the second double conveyor 5 higher than the transport of the slat-type double conveyor; however, it is desirable for the second double conveyor 5 to be able to control the grip pressure by a pressure regulator using air pressure, oil pressure, etc., to grip the continuous stripe-form foamed body F at an appropriate pressure.

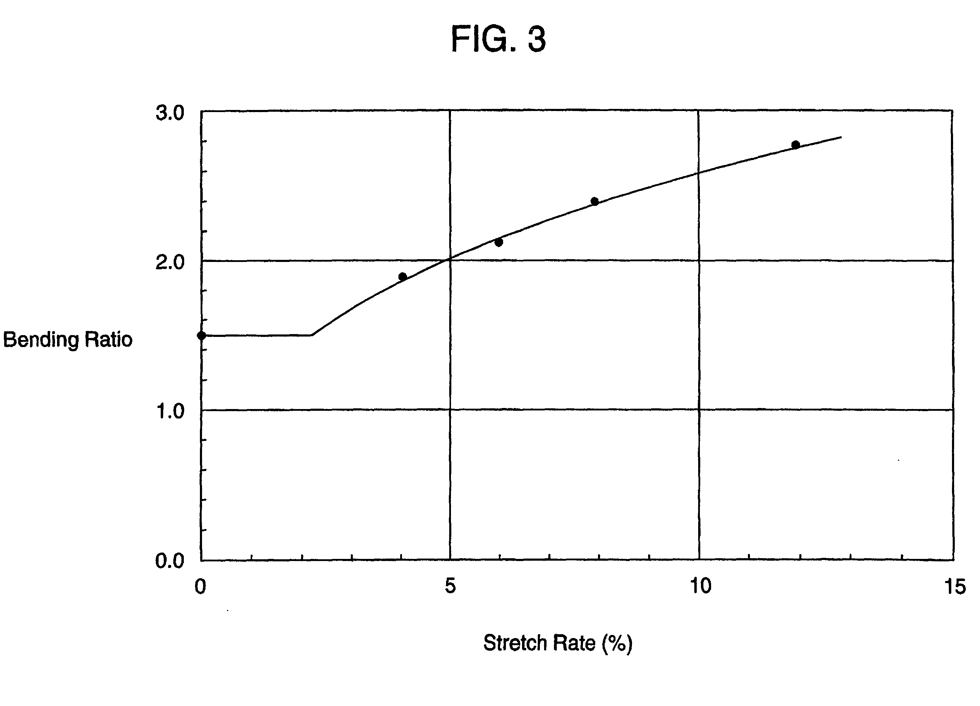

Next, the relationship between the stretch rate and the ratio of the bending elasticity $E_{MD}$ in the longitudinal direction $E_{MD}$ of the laminate of this invention to the bending elasticity in the width direction $E_{TD}$ will be explained. Figure 3 shows an improvement of the ratio of the bending elasticity modulus in the longitudinal direction $E_{MD}$ and the bending elasticity modulus in the width direction $E_{TD}$. The abscissa indicates the stretch rate, and the ordinate indicates the bending elasticity modulus in the longitudinal direction $E_{MD}$ and the bending elasticity modulus in the width direction

$E_{TD}$. From Figure 3, the ratio of the bending elasticity modulus in the longitudinal direction/bending elasticity modulus in the width direction of the modified foamed phenol resin body of the present invention is raised from 1.5 in an unstretched state to 1.9 by a 4% stretch and up to 2.8 by a 12% stretch, and an improved foamed body is obtained, which is difficult to bend in the longitudinal direction and has excellent construction properties. If the value of $E_{MD}/E_{TD}$ is 1.6 or more, the effect of the bending difficulty in the longitudinal direction at a time of handing is distinct and preferable, and if the value of $E_{MD}/E_{TD}$ is more than 2.8, the bending in the width direction causes a problem, which is inappropriate.

The stretch rate in the present invention is a ratio of the transport of the second double conveyor and the slat-type conveyor (first conveyor) and is expressed by the following equation.

Stretch rate = (transport of the second double conveyor/transport of the slat-type conveyor - 1) x 100(%)

The stretch rate used also depends on the operating conditions such as the temperature of the first oven; however, it is preferably set it to 4-12%. If the stretch rate is smaller than 4%, the improvement of the surface flatness, which is the stretch effect, and the improvement of the bending elasticity modulus in the longitudinal direction $E_{MD}$ and the bending elasticity modulus in the width direction $E_{TD}$ are sometimes insufficient. Also, if the stretch rate is too much beyond 12%, the cross section of the face material is sometimes ruptured, which is not preferable. It is more preferred that the stretch rate be in the range of 4-8%.

Although there is not special limitation on the transportation speed of the aforementioned first slat-type conveyor, it is preferred to be in the range of 1-80 m/min from the point of view of producibility. Although there is no special limitation on the transportation speed of the second slat-type conveyor, it is preferred to be in the range of 1-90 m/min from the point of view of producibility.

The phenol resin used in the present invention is a resol phenol resin obtained by reacting phenol and formaldehyde as starting raw materials in the presence of a basic catalyst. As a more preferable embodiment of the present invention, a modified phenol resin containing urea and/or dicyandiamide and melamine can be mentioned.

The basic process for manufacturing the modified phenol resin is as follows.

(i) Preparation of a resol phenol resin using phenol and formaldehyde as starting raw materials in the presence of a basic catalyst
(ii) Neutralization of the resin with an acid
(iii) Process for forming a modified phenol resin by adding urea and/or dicyanamide to the above-mentioned resol resin
(iv) Removal of moisture by vacuum striper, etc.

The phenol and the formaldehyde, which are starting raw materials, are more appropriately used at their molar ratio of 1:1.7-1:3, and they are synthesized by adding a basic catalyst such as sodium hydroxide and potassium hydroxide and heating to 40-100°C.

The formaldehyde can be appropriately used at a concentration of usually about 30-60%.

The amount of urea and/or dicyandiamide and melamine added, which are modifiers, is more preferably in the range of 5-30 mol% of the formaldehyde which is a starting raw material. If the amount of urea and/or dicyandiamide and melamine added is less than 5 mol%, the advantage of the excellent antiaging characteristic of the adiabatic performance is sometimes lost. Also, if the amount of urea and/or dicyandiamide and melamine added is more than 30 mol%, the mechanical strength of the foamed body is deteriorated, which is not preferable.

The modifiers may also be added before and after the neutralization; however it is more preferable to use a sufficient temperature and to allow sufficient time in reacting free formaldehyde. Usually, the reaction time of about 6 h is sufficient at 30°C.

Next, in the modified phenol resin, the free moisture in the resin is reduced using a vacuum stripper, etc., to obtain an appropriate range of the moisture rate and the viscosity for foaming. Usually, the resin is prepared so that the moisture rate is 4-10 wt% and the viscosity at 40°C is about 4000-40,000 cps.

A surfactant is dissolved in the modified phenol resin with the above-mentioned moisture rate and viscosity prepared, and a foaming agent and a curing catalyst are added and mixed with it by a mixer head and continuously discharged on the lower surface material running through a conduit. As the discharging method on the face material, a method which moves the conduit back and forth perpendicularly to the advancing direction of the face material, a multiport distribution pipe method, etc., can be used.

As the surfactant used in the present invention, a nonionic surfactant is usually used. For example, silicone surfactants such as polydimethylsiloxane, block copolymers of ethylene oxide and propylene oxide, condensates with alkylphenol such as alkylene oxide and nonylphenol and dodecylphenol, condensates of alkylene oxide and castor oil, and fatty acid esters such as polyoxyethylene fatty acid ester are mentioned. These surfactants can be are used alone or in combinations of several.

As the foaming agent used in the present invention, HFCs such as difluoromethane (HFC 32), 1,1,1,2-tetrafluoroethane (HFC 134a), and 1,1-difluoroethane (HFC 152a), HCFCs such as 1-chloro-1,1-difluoroethane (HCF C142b), and hydrocarbons such as butane, n-pentane, cyclopentane, and isopentane can be used.

As the curing catalyst used in the present invention, acidic compounds such as inorganic acids and organic acids are used; however, aromatic sulfonic acids such as toluenesulfonic acid, xylenesulfonic acid, and phenolsulfonic acid are appropriately used. As a curing assistant, resorcinol, cresol, o-methylolphenol, p-methylolphenol, etc., can also be added. The curing catalyst and the curing assistant can also be diluted in a solvent such as diethylene glycol and used.

The foaming phenol resin mixture sandwiched between the upper and lower surface materials is passed through a slat-type double conveyor, followed by foaming and curing to obtain a continuous stripe-form foamed body. However, when the temperature of the double conveyor is lower than 60°C, the material cannot be fully foamed or cured. As a result, the strength and heat conductivity of the foamed body laminate become low. On the other hand, when the temperature of the double conveyor is higher than 110°C, the cell film of the foamed body is destroyed. As a result, the heat conductivity is deteriorated. Consequently, the temperature of the slat-type double conveyor should be in the range of 60-110°C.

After passing through the slat-type double conveyor and stretched by the second double conveyor, the continuous stripe-form foamed body is cut at a prescribed length in the longitudinal direction and then further cured in the postcuring operation. When the postcuring temperature is lower than 60°C, the heat conductivity of the foamed body laminate changes over time, and the dimensions of the foamed body laminate change significantly at a high temperature (such as 90°C). On the other hand, when the postcuring temperature is higher than 140°C, the foamed body becomes brittle, and the mechanical strength of the foamed body laminate becomes low. Consequently, the postcuring temperature should be in the range of 60-140°C.

The foamed body laminate of this invention is particularly suitable for various types of adiabatic building materials because it has low heat conductivity, high flame resistance, high heat resistance, low fuming property, and good processability.

EXAMPLES

Next, the present invention is explained in further detail with application examples and comparative examples.

Each measured value in the application examples was based on the following methods.

(1) Surface flatness

A foamed laminate cut to about 1.1 m in width and about 1.2 m in length was placed on a table with a flat surface, and the height of the center width-wise was measured at intervals of usually 1 in (2.54 cm) and as much as 5 in longitudinally. Next, 1 in of the part with a severe flapping shape corresponding to the joints of the slats was measured at intervals of 1/6 in, and 56 points were repeatedly measured over 30 in as the entire length. At that time, the standard deviation (mm) of these height values is assumed to be the surface flatness. In other words:

$$\text{Surface flatness (mm)} = \sqrt{\frac{n \times \Sigma \, x \, 1^2 - (\Sigma \, x \, 1)^2}{n \times (n-1)}}$$

n: Number of measured point (n = 56)
$x_i$: Height at each position (mm)

(2) Measurement of thickness

The thickness was measured at a push pressure of 5 g using a dial gauge having a tip with a columnar flat bottom shape with a diameter of 1.5 mm.

(3) Bending elasticity modulus and bending strength Measured according to ASTM C 203.

(4) Density

Measured according to JIS K 7222. Also, the density of the foamed body laminate is the density measured for the foamed body after removing the face material by peeling it off.

Application Example 1 and Comparative Example 1

(1) Modified phenol resin composition

3500 kg 52% formaldehyde and 2510 kg 99% phenol were charged into a reactor, stirred by a propeller rotating stirrer, and the liquid temperature in the reactor was adjusted to 40°C by a temperature regulator. Next, 50% aqueous NaOH solution was added, and the temperature was raised while stirring. Then, the reaction was carried out. When the Ostwald viscosity reached 60 cs (measured value at 25°C), the reaction solution was cooled, and 570 kg urea (corresponding to 15 mol% of the amount of formaldehyde charged) was added. Then, 50% of an aqueous aromatic sulfonic acid solution was added to it and neutralized, so that a modified phenol resin was obtained.
Next, the above-mentioned resin was dehydrated by a thin-film evaporator until the amount of moisture reached 6 wt%, and the resin with a viscosity of 6000 cps at 40°C was obtained. A 4 wt% mixture of Pluronic F-127 (ethylene oxide-propylene oxide block copolymer made by BASF) and Herfoam [transliteration] PI (ethoxylated alkylphenol) made by Huntsman Chemical Co.) at a weight ratio of 1:1 was added as a surfactant to the resin and dissolved, so that a modified phenol resin composition was obtained.

(2) Manufacture of foamed body

The above-mentioned modified phenol resin composition, foaming agent HCFC 142b, and catalyst were supplied in the following composition to a mixing head and supplied to the moving lower surface material through a multiport distribution pipe. Also, perfluoroalkane (3M Pafoamansflide [transliteration] 5050) at 2 parts by weight was added as a foaming assistant to the foaming agent HCFC 142b.

    Modified phenol resin composition at 100 parts by weight
    Foaming agent at 13.5 parts by weight
    Catalyst at 13.3 parts by weight

As the catalyst, an organosulfonic acid mixture composition presented in Japanese Kokai Patent Application No. Sho 63[1988]-10642 was used, and as the face material, a nonwoven fabric made of polyester, Spun Bond ET5030 (made by Asahi Chemical Industry Co., Ltd., a tsubo of 30 g/m$^2$, a thickness of 0.15 mm and a fiber size of 14 $\mu$m) was used.
Next, the foamed body is coated with the same kind of upper surface material and supplied to the slat-type double conveyor. The running speed of the slat-type double conveyor was set to 2.05 m/min, and the temperature was maintained at 80-90°C over the entire length.
Then, the continuous foamed body that passed through the slat-type double conveyor was vertically gripped by a second double conveyor as shown in Figure 2, and the transport was changed to 2.13 m/min (Application Example 1), 2.17 m/min (Application Example 2), 2.23 m/min (Application Example 3), and 2.30 m/min (Application Example 4) (the stretch rate corresponded to 4%, 6%, 9%, and 12%, respectively). Under each condition, modified foamed phenol laminates were manufactured. Stretching in the running direction was carried out past the outlet of the slat-type double conveyor; however, the continuous stripe-form foamed body at the outlet of the slat-type double conveyor had flexibility to the degree that it recovered after being lightly pressing with a finger. The curing was not complete. Also, the obtained foamed body was in a good state without exudation of the resin.
On the other hand, in Comparative Example 1, the second double conveyor was held in an open state, and a continuous foamed laminate was manufactured without extracting. Also, in Comparative Example 2, a continuous foamed laminate was extracted by the second double conveyor; however, the second double conveyor speed was set to 2.09 m/min. In Comparative Example 3, the conveyor speed was set to 2.56 m/min, and a foamed laminate was similarly manufactured (the stretch rate corresponded to 0%, 2%, and 25%, respectively). In all of the above-mentioned application examples and comparative examples, in the second double conveyor, the load was adjusted by an air cylinder so that an excessive load was not applied to the foamed body.
The continuous foamed laminate was cut to 1.9 m in length by a cutter installed in the rear of the second double conveyor, and the curing was completed by a postcuring oven. The postcuring was carried out by gradually raising the oven temperature from room temperature to 92°C as shown below, and curing was finished over about 4 h.

    Holding at 75°C for 15 min, then
    Holding at 80°C for 30 min, then
    Holding at 85°C for 30 min, then

Holding at 92°C for 140 min, and then cooling to room temperature.

The density of the foamed body laminate obtained was about 27 kg/m$^3$, and the thickness was about 27 mm. Flexibility, meaning shape recovery when the foamed body, after postcuring, was pressed by a finger, was not recognized.

Figure 1 shows the surface shape of a foamed body at a stretch rate of 6% (Application Example 2) and a surface shape of a foamed body of the conventional method; it is seen that the flatness of the surface shape is markedly improved in the manufacturing method of the present invention.

Table I summarizes the surface flatness, ratio of the bending elasticity modulus in the longitudinal direction/bending elasticity modulus in the width direction, bending elasticity modulus, and bending strength of the foamed bodies obtained in Application Examples 1-5 and Comparative Examples 1-4. The case where the foamed body was extracted by the second conveyor in Comparative Example 1 corresponds to the conventional manufacturing method. In a range of a stretch rate of 4-12%, the surface flatness is markedly improved, and the ratio of the bending elasticity modulus in the longitudinal direction/bending elasticity modulus in the width direction is also increased to 1.89-2.78, compared with 1.5 when the stretch rate is 0%. The bending elasticity modulus in the longitudinal direction is also improved from 200 kg/cm$^2$ for the laminate with a stretch rate of 0% to 300 kg/cm$^2$ for the laminate with a stretch rate of 12%. The bending strength in the longitudinal direction is similarly improved from 4.8 kg/cm$^2$ for the laminate with a stretch rate of 0% to 5.6 kg/cm$^2$ for the laminate with a stretch of 12%. In Comparative Example 2, the phenomenon was generated in which the stripe-form foamed body was left over between the slat-type double conveyor and the second double conveyor, and continuous molding was impossible. When the stretch rate of Comparative Example 3 was set to 25%, the stretch of the foamed body could not be followed, and the foamed body fractured, so that molding was impossible.

Figure 3 shows the stretch rate and the ratio of the bending elasticity modulus in the longitudinal direction/bending elasticity modulus in the width direction of the foamed bodies obtained in Application Examples 1-4 and Comparative Example 1. It can be seen that along with the stretch rate, the ratio of the bending elasticity modulus in the longitudinal direction/bending elasticity modulus in the width direction is improved, and a difficult bending in the longitudinal direction is obtained.

Comparative Example 4

Similarly to Application Example 1 except for using an aluminum hydroxide paper (made by Awa Papermaking K.K., a tsubo of 140 g/m$^2$, and a thickness of 0.4 mm) as a face material, setting the amount (g/min) of said modified phenol resin of Application Example 1, foaming agent HCFC 142b, and catalyst supplied to the mixing head as follows, setting the interval of the slat-type double conveyor to 20 mm, and setting the stretch rate to 0%, a modified foamed phenol resin body laminate was obtained.

Modified phenol resin composition at 100 parts by weight
Foaming agent at 8 parts by weight
Catalyst at 9.5 parts by weight

The thickness of the foamed body laminate obtained was about 20 mm, and the density was 40 kg/m$^3$.

The ratio of the bending elasticity modulus in the longitudinal direction/bending elasticity modulus in the width direction of the foamed body laminate was about 1.2, which was insufficient. Also, the surface flatness was as poor at 0.51 mm. In the appearance, slat traces were distinct, and the product quality was inferior.

Application Example 5

Similarly to Application Example 1 except for using a graft paper (trade name: N Liner made by Honshu Paper Co., Ltd., a tsubo of 120 g/m$^2$, and a thickness of 0.2 mm) as a face material, setting the amount of said modified phenol resin of Application Example 1, foaming agent HFC 134a, and catalyst supplied to the mixing head as follows, and setting the stretch rate to 5%, a modified foamed phenol resin body laminate was obtained.

As an assistant, perfluoroether (Ausimont made by USA Co.) "Galden HT-55" at 2 parts by weight was added to the foaming agent HFC 134a.

Modified phenol resin composition at 100 parts by weight
Foaming agent at 15 parts by weight
Catalyst at 13 parts by weight

The thickness of the foamed body laminate obtained was about 27 mm, and the density was 27 kg/m$^3$. How-

ever, the ratio of the bending elasticity modulus in the longitudinal direction/bending elasticity modulus in the width direction of the foamed body laminate of Application Example 5 was 1.86. Bending was difficult in the longitudinal direction, and the handling property was excellent. The surface flatness of the foamed body laminate was as good as 0.16 mm. In the appearance, slat traces remained, and the product quality was excellent.

Thus, for the foamed body laminates obtained by the manufacturing method of the present invention, the ratio of the bending elasticity modulus in the longitudinal direction/bending elasticity modulus in the width direction is high. Also, the flatness of the surface shape is excellent, and the product quality is good.

## Table I

| Appl. No. | Face Material | Stretch Rate (%) | Extraction of the Second Conveyor | Evaluation of the Foamed Body | | | | |
|---|---|---|---|---|---|---|---|---|
| | | | | $E_{MD}$ (kg/cm$^2$) | $E_{TD}$ (kg/cm$^2$) | $E_{MD}/E_{TD}$ | Bending Strength (kg/cm$^2$) | Surface Flatness (mm) |
| Ex. 1 | Nonwoven fabric composed of polyester | 4 | Present | 240 | 127 | 1.89 | 4.9 | 0.18 |
| Ex. 2 | Nonwoven fabric composed of polyester | 6 | Present | 260 | 122 | 2.13 | 5.2 | 0.18 |
| Ex. 3 | Nonwoven fabric composed of polyester | 9 | Present | 280 | 117 | 2.39 | 5.4 | 0.25 |
| Ex. 4 | Nonwoven fabric composed of polyester | 12 | Present | 300 | 108 | 2.78 | 5.6 | 0.15 |
| Co. Ex. 1 | Nonwoven fabric composed of polyester | 0 | None | 200 | 133 | 1.50 | 4.8 | 0.51 |
| Co. Ex. 2 | Nonwoven fabric composed of polyester | 2 | Present | molding is impossible | molding is impossible | molding is impossible | molding is impossible | molding is impossible |
| Co. Ex. 3 | Nonwoven fabric composed of polyester | 25 | Present | fracture of the foamed body | fracture of the foamed body | fracture of the foamed body | fracture of the foamed body | fracture of the foamed body |
| Co. Ex. 4 | Aluminum hydroxide paper | 0 | None | 1020 | 850 | 1.20 | 14.8 | 0.51 |
| Co. Ex. 5 | Graft Paper | 5 | Present | 966 | 520 | 1.86 | 8.5 | 0.16 |

EP 1 056 580 B1

**Claims**

1. A foamed phenol resin laminate constituted by a core (F) of a foamed phenol resin and flexible facing material (2,3) attached without adhesive to both faces thereof, characterize in that the laminate has a ratio of bending elasticity modulus in a first direction within the plan of the laminate, $E_{MD}$, to bending elasticity modulus in a second direction within the plan of the laminate, perpendicular to said first direction, $E_{TD}$, of 1.6 to 2.8.

2. A laminate according to claim 1, wherein the phenol resin contains at least one of urea, dicyandiamide and melamine.

3. A method for the manufacture of a foamed phenol resin laminate according to claim 1 or claim 2, which comprises mixing together a phenol resin, a surfactant, a foaming agent and a catalyst thereby to form a foaming mixture, discharging the foaming mixture onto a flexible facing material (2), coating the upper surface of the foaming mixture with a flexible facing material (3), and passing the resulting laminate through a double slat conveyor system (4), **characterized by** stretching the foamed laminate in the running direction before curing of the foam is complete.

4. A method according to claim 3, wherein the laminate is stretched by 4 to 12%.

5. A method according to claim 3 or claim 4, wherein stretching is carried out by the double slat conveyor.

6. The manufacturing method of the foamed phenol resin body laminate of any of Claims 3-5, **characterized by** the fact that the phenol resin is a modified phenol resin containing at least one of urea, dicyandiamide, and melamine.

**Patentansprüche**

1. Geschäumtes Phenolharzlaminat gebildet aus einem Kern (F) eines geschäumten Phenolharzes und einem flexiblen Schichtmaterial (2, 3), das ohne Klebemittel an beiden Flächen angebracht ist,
    **dadurch gekennzeichnet, daß**
    das Laminat ein Verhältnis von einem Biegeelastizitätsmodul in einer ersten Richtung innerhalb der Ebene des Laminats, $E_{MD}$, zu einem Biegeelastizitätsmodul in einer zweiten, zu der ersten Richtung senkrechten Richtung innerhalb der Ebene des Laminats, $E_{TD}$, von 1,6 bis 2,8 aufweist.

2. Laminat nach Anspruch 1, wobei das Phenolharz zumindest eines von Urea, Dizyandiamid und Melamin aufweist.

3. Verfahren zum Herstellen eines geschäumten Phenolharzlaminats nach Anspruch 1 oder 2, das umfaßt:

    das Zusammenmischen eines Phenolharzes, eines oberflächenaktiven Mittels, eines Aufschäummittels und eines Katalysators, wobei eine geschäumte Mischung gebildet wird,
    das Aufbringen der geschäumten Mischung auf ein flexibles Schichtmaterial (2),
    das Beschichten der oberen Fläche der geschäumten Mischung mit einem flexiblen Schichtmaterial (3), und
    das Weitergeben des resultierenden Laminats durch ein Doppelplattenförderbandsystem (4),

    **gekennzeichnet durch**
    das Auseinanderziehen des geschäumten Laminats in Laufrichtung bevor das Aushärten des Schaums vollständig ist.

4. Verfahren nach Anspruch 3, wobei das Laminat um 4 bis 12% auseinandergezogen wird.

5. Verfahren nach Anspruch 3 oder 4, wobei das Auseinanderziehen durch das Doppelplattenförderband ausgeführt wird.

6. Verfahren nach einem der Ansprüche 3 bis 5, wobei das Phenolharz ein verändertes Phenolharz ist, das zumindest eines von Urea, Dizyandiamid und Melamin umfaßt.

**Revendications**

1. Stratifié en résine phénolique expansée constitué d'un coeur (F) formé d'une résine phénolique expansée, et d'une matière de parement flexible (2, 3) fixée sans adhésif aux deux faces de celui-ci, **caractérisé en ce que** le stratifié a un rapport de son module d'élasticité en flexion dans une première direction dans son plan, $E_{MD}$, sur son module d'élasticité en flexion dans une seconde direction dans son plan, perpendiculaire à ladite première direction, $E_{TD}$, de 1,6 à 2,8.

2. Stratifié selon la revendication 1, dans lequel la résine phénolique contient l'un au moins des éléments du groupe constitué par l'urée, le dicyandiamide et la mélamine.

3. Procédé de fabrication d'un stratifié en résine phénolique expansée selon la revendication 1 ou la revendication 2, comprenant les étapes qui consistent à mélanger ensemble une résine phénolique, un agent tensioactif, un agent moussant et un catalyseur pour ainsi former un mélange moussant, à déverser le mélange moussant sur une matière de parement flexible (2), à revêtir la surface supérieure du mélange moussant d'une matière de parement flexible (3), et à faire passer le stratifié résultant à travers un système de double convoyeur à lattes (4), **caractérisé par** une étape qui consiste à étirer le stratifié expansé dans la direction d'avancement avant la fin du durcissement de la mousse.

4. Procédé selon la revendication 3, dans lequel le stratifié est étiré de 4 à 12%.

5. Procédé selon la revendication 3 ou la revendication 4, dans lequel l'étirage est réalisé par le double convoyeur à lattes.

6. Procédé de fabrication du stratifié à corps en résine phénolique expansée selon l'une quelconque des revendications 3 à 5, **caractérisé en ce que** la résine phénolique est une résine phénolique modifiée contenant l'un au moins des éléments du groupe constitué par l'urée, le dicyandiamide et la mélamine.

FIG. 1

# FIG. 2

# FIG. 3

EP 1 056 580 B1

# FIG. 4

EP 1 056 580 B1